# EUROPÄISCHE PATENTANMELDUNG

(11) **EP 3 064 660 A1**
(43) Veröffentlichungstag der Anmeldung: **07.09.2016**
(21) Anmeldenummer: 15157630.3
(22) Anmeldetag: 04.03.2015
(51) Int. Cl.: E03C 1/05, G05D 23/13, E03C 1/04

(54) **Elektronisch gesteuerte Sanitärarmatur**

(71) Anmelder: Franke Water Systems AG, 5726 Unterkulm (CH)
(72) Erfinder: Brunner, Stefan, CH-5040 Schöftland (CH); Gloor, Roland, 5732 Zetzwil (CH); Knupfer, Daniel, 7000 Chur (CH); Knupfer, Thomas, 7000 Chur (CH)
(74) Vertreter: Lemcke, Brommer & Partner Patentanwälte Partnerschaft mbB

(57) **Zusammenfassung**

Der Bedienteil (16) der Sanitärarmatur weist einen Temperaturschieber (20) und einen Durchflussschieber (22) auf. Diese beiden Schieber (20, 22) sind entlang der ersten Bewegungsbahn (40) beziehungsweise zweiten Bewegungsbahn (42) hin und her verschiebbar, um einerseits die Temperatur des Wassers und andererseits den Durchfluss des Wassers einzustellen. Sensoren (54, 60) erfassen den Ort beziehungsweise die Stellung des Temperaturschiebers (20), beziehungsweise des Durchflussschiebers (22) und geben entsprechende Temperatursignale und Durchflusssignale an eine elektronische Steuerung (56) ab. Diese steuert eine Ventilbatterie (68) derart, dass durch den Wasserauslauf (28) Wasser mit der gewünschten Temperatur und der eingestellten Durchflussrate aus der Sanitärarmatur ausfliesst. Der Bedienteil (16) kann von der Armatur getrennt sein, und er Durchflussschieber (22) kann mittels eines Umschaltventils und einer neutralen Mittelstellung zur Ansteuerung zweier Auslässe verwendet werden.

## Beschreibung

Die vorliegende Erfindung betrifft eine Sanitärarmatur gemäss dem Obergriff des Anspruchs 1.

Eine Sanitärarmatur dieser Art ist aus dem Dokument WO 2004/081300 A1 bekannt. Sie weist eine Ventilbatterie mit einem Kaltwassereinlass und einem Warmwassereinlass sowie einem Mischwasserauslass auf. Dieser ist mit einem Wasserauslauf verbunden, durch welchen das Wasser, beispielsweise in ein Waschbecken ausläuft. Eine mit einer Energieversorgung verbundene Sensoreinheit umfasst mindestens einen Näherungssensor, wobei dieser beim Eindringen einer Person in den Detektionsbereich des Näherungssensors ein Aktionssignal an eine mit der Sensoranordnung und der Ventilbatterie verbundene elektronische Steuerung abgibt. Das Aktionssignal unterscheidet sich im Potenzial und/oder der Qualität von einem Ruhesignal, welches der Näherungssensor ohne Einwirkung einer Person abgibt. Die Steuerung bringt die Ventilbatterie - mittels Erfassen und Verarbeiten einer bestimmten Anzahl Aktionssignale oder durch ein Aktivieren des Sensors über eine Zeitdauer - in eine diesen Signalen entsprechende Stellung, wodurch Wasser einer vorbestimmten Temperatur und/oder mit einem vorbestimmten Flusswert dem Wasserauslauf zugeführt wird. Diese Sanitärarmatur ist kompliziert zu bedienen und intuitiv praktisch nicht bedienbar.

Es ist deshalb eine Aufgabe der vorliegenden Erfindung, die bekannte Sanitärarmatur derart weiterzubilden, dass sie einfach und intuitiv bedienbar ist.

Diese Aufgabe wird mit einer Sanitärarmatur gelöst, welche die Merkmale des Anspruchs 1 aufweist.

Die erfindungsgemässe Sanitärarmatur weist einen Wasserauslauf, eine Ventilbatterie, einen Bedienteil mit einer Sensoranordnung und eine elektronische Steuerung auf.

Die elektrisch gesteuerte Ventilbatterie ist mit einem Kaltwassereinlass zum Anschliessen an eine Kaltwasserspeiseleitung, einen Warmwassereinlass zum Anschliessen an eine Warmwasserspeiseleitung und einen mit dem Wasserauslauf strömungsverbundenen Mischwasserauslass versehen. Die elektronische Steuerung steuert aufgrund von elektrischen Signalen der Sensoranordnung die Ventileinheit an, wodurch Kaltwasser, Warmwasser oder Mischwasser mit einem gewünschten Durchflusswert und/oder mit einer gewünschten Temperatur dem Wasserauslauf zugeführt wird.

Der Bedienteil weist einen Temperaturschieber auf, welcher von Hand entlang einer ersten Bewegungsbahn hin und her bewegbar ist. Weiter weist der Bedienteil einen Durchflussschieber auf, welcher entlang einer zweiten Bewegungsbahn von Hand hin und her bewegbar ist. Die Sensoranordnung weist einen stationär angeordneten ersten Sensor und einen ebenfalls stationär angeordneten zweiten Sensor auf. Der erste Sensor erzeugt in Abhängigkeit vom Ort des Temperaturschiebers ein entsprechendes elektrisches Temperatursignal und der zweite Sensor erzeugt in Abhängigkeit vom Ort des Durchflussschiebers ein entsprechendes elektrisches Durchflusssignal. Die Steuerung steuert aufgrund dieses Temperatursignals und dieses Durchflusssignals die Ventilbatterie an.

Dadurch, dass die Bedienelemente in Form eines Temperaturschiebers und eines Durchflussschiebers voneinander getrennt sind, ist die erfindungsgemässe elektrisch gesteuerte Sanitärarmatur äusserst einfach und intuitiv, somit benutzerfreundlich bedienbar.

Zur Anwendung geeignete Ventilbatterien und deren Ansteuerung mittels einer elektronischen Steuerung sind allgemein bekannt, beispielsweise auch aus dem Dokument WO 2004/081300 A1.

Bevorzugt weist der erste Sensor einen Hall-Sensor und der Temperaturschieber einen Permanentmagneten auf, welcher mit dem Hall-Sensor zusammenwirkt. Entsprechend weist der zweite Sensor bevorzugt ebenfalls einen (eigenen) Hall-Sensor und der Durchflussschieber ebenfalls einen (eigenen) Permanentmagneten auf, welcher mit diesem Hall-Sensor zusammenwirkt.

Hall-Sensoren sind allgemein bekannt. Wird ein Hall-Sensor von einem Strom durchflossen und in ein senkrecht dazu verlaufendes Magnetfeld gebracht, liefert er eine Ausgangsspannung, die proportional zum Produkt aus magnetischer Feldstärke und Strom ist. Entsprechend sind der Permanentmagnet des Temperaturschiebers und der Permanentmagnet des Durchflussschiebers derart angeordnet, dass das von ihnen erzeugte Magnetfeld möglichst rechtwinklig zum elektrischen Strom im Hall-Sensor verläuft. Je näher eine Permanentmagnet zum zugeordneten Hall-Sensor kommt, umso grösser ist die auf den Hall-Sensor einwirkende magnetische Feldstärke und entsprechend das durch diesen erzeugte Temperatursignal beziehungsweise Durchflusssignal.

Bevorzugt weist der erste Sensor mehrere Hall-Sensoren auf, welche in einer Reihe in Richtung der ersten Bewegungsbahn hintereinander angeordnet sind. Entsprechend weist der zweite Sensor bevorzugt ebenfalls mehrere (eigene) Hall-Sensoren auf, welche ihrerseits in einer Reihe in Richtung der zweiten Bewegungsbahn hintereinander angeordnet sind.

Durch diese Ausgestaltung kann die Länge der ersten Bewegungsbahn beziehungsweise der aktive Bewegungsbereich des Temperaturschiebers und die Länge der zweiten Bewegungsbahn beziehungsweises der aktive Bewegungsbereich des Durchflussschiebers gegenüber einer Ausführungsform mit je nur einem Hall-Sensor vergrössert werden. Überdies ermöglicht die Ausführungsform mit je einer Reihe von Hall-Sensoren eine Abstufung der gewünschten Wassertemperatur und des gewünschten Wasserdurchflusses, indem jeder Stufe ein eigener Hall-Sensor zugeordnet ist.

Bevorzugt ist für nur Kaltwasser kein Hall-Sensor vorgesehen, sodass die Steuerung auch kein Temperatursignal erhält und somit diese die Ventilbatterie derart ansteuert, dass ausschliesslich Kaltwasser zum Mischwasserauslass fliessen kann.

Entsprechend bevorzugt ist der Stellung des Durchflussschiebers, bei welcher kein Wasser fliessen soll, d.h. einer Aus-Stellung, kein Hall-Sensor zugeordnet. Entsprechend erhält die Steuerung kein Durchflusssignal, wodurch diese die Ventilbatterie derart ansteuert, dass weder Kaltwasser noch Warmwasser vom betreffenden Einlass zum Mischwasserauslass fliessen kann.

Bevorzugt weist die Sanitärarmatur eine elektronische Schaltung auf, welche einerseits mit der Steuerung und andererseits mit den Hall-Sensoren verbunden ist. Diese elektronische Schaltung speist jeden der Hall-Sensoren mit einem definierten Strom. Weiter wird bevorzugt die jedem Hall-Sensor abgegriffene Spannung ebenfalls dieser Schaltung zugeführt, welche diese Spannungen verstärkt und als Temperatursignal beziehungsweise Durchflusssignal an die Steuerung abgibt. Selbstverständlich ist es alternativ auch denkbar, dass die Komponenten der elektronischen Schaltung in die Steuerung integriert sind.

In bevorzugter Weise weist der Bedienteil eine Wand auf. Entlang der einen Seite dieser Wand sind der Temperaturschieber und der Durchflussschieber bewegbar. Der erste und der zweite Sensor sind auf der anderen Seite der Wand angeordnet. Dadurch werden einerseits die Sensoren von Umgebungseinflüssen geschützt und andererseits wird verhindert, dass allenfalls mit den Schiebern mitbewegte Verunreinigungen die Sensoren beschädigen können.

Bevorzugt sind die Führungsbahnen für den Temperaturschieber und den Durchflussschieber an der Wand ausgebildet. Die Führungsbahnen können beispielsweise an der Wand schwalbenschwanzförmig ausgebildet sein. Die Wand wird vorzugsweise als Kunststoff Spritzgussteil hergestellt.

Bevorzugt liegt die Wand wenigstens annähernd in einer horizontalen Ebene und sind die Führungen auf der Unterseite der Wand ausgebildet. Dies verhindert die Anlagerung von Schmutz in den Führungen.

Bevorzugt sind der Wasserauslauf und der Bedienteil einem gemeinsamen Armaturengehäuse zugeordnet. Es ist jedoch auch möglich, dass der Wasserauslauf an einem eigenen Auslaufgehäuse angeordnet ist, während der Bedienteil in beziehungsweise an einem separaten Bediengehäuse angeordnet ist.

Bevorzugt befinden sich die elektronische Steuerung und die Ventilbatterie ausserhalb dieser Gehäuse. Falls jedoch eine weiter oben erwähnte elektronische Schaltung vorhanden ist, ist diese bevorzugt im Armaturengehäuse beziehungsweise Bediengehäuse angeordnet.

Sind dem Wasserauslauf und dem Bedienteil ein gemeinsames Armaturengehäuse zugeordnet, weist dieses bevorzugt einen Sockelteil sowie einen separaten, am Sockelteil befestigten Kopfteil auf. Dem Kopfteil ist ein in sich geschlossenes Dichtelement zugeordnet, welches das Eindringen von Flüssigkeit und Schmutz in das Innere des Armaturengehäuses insbesondere des Kopfteils verhindert. Die Sensoranordnung ist auf der Innenseite des Kopfteils und somit im Innern des Armaturengehäuses und der Temperaturschieber sowie der Durchflussschieber sind auf der der Umgebung zugewandten Aussenseite des Kopfteils und somit des Armaturengehäuses angeordnet.

Bevorzugt weist der Kopfteil eine untere Abdeckplatte auf, welche mit dem Dichtelement zusammenwirkt und den Kopfteil gegen unten abschliesst.

Die Wand ist bevorzugt durch ein Führungselement gebildet, an welchem der Temperaturschieber und der Durchflussschieber geführt sind. Bevorzugt ist das Führungselement in eine obere Abdeckung des Kopfteils, umfangsseitig dichtend eingesetzt. Bei dieser letzgenannten Ausführungsform wirkt das Dichtelement bevorzugt mit dem Führungselement zusammen.

Bevorzugt weist die Sanitärarmatur eine Temperaturbegrenzung auf, welcher verhindert, dass Mischwasser mit einer Temperatur ausfliessen kann, welche höher ist als eine vorbestimmte, gewünschte Mischwassertemperatur.

So ist es möglich, dass die Temperaturbegrenzung den Weg des Temperaturschiebers begrenzt. Es ist auch möglich, dass die Temperaturbegrenzung in die elektronische Steuerung integriert ist. Weiter ist es möglich, die Mischwassertemperatur mittels eines Thermostaten zu überwachen.

Es ist möglich, die Aus-Stellung des Durchflussschiebers wenigstens annähernd in der Längsmitte der zweiten Bewegungsbahn vorzusehen. Der Durchflussschieber ist, ausgehend von der Aus-Stellung, in beiden entgegengesetzten Richtungen bewegbar. Die elektronische Steuerung steuert, aufgrund des vom zweiten Sensor erhaltenen Durchflusssignals, die Ventilbatterie derart an, dass das Mischwasser dem einen oder andern von zwei Wasserausläufen zugeführt wird. Bevorzugt weist in diesem Fall die Ventilbatterie ein Umstellventil auf, welches das Mischwasser dem gewünschten Wasserauslauf zuleitet.

Die Erfindung wird anhand in der Zeichnung dargestellten Ausführungsformen näher beschrieben. Es zeigen rein schematisch:
- Fig. 1: in perspektivischer Ansicht ein Armaturengehäuse, einer erfindungsgemässen Sanitärarmatur mit einem Wasserauslauf sowie einen Temperaturschieber und einen Durchflussschieber zum Wählen der Wassertemperatur beziehungsweise des Wasserdurchflusses;
- Fig. 2: die in Figur 1 gezeigten Teile der Sanitärarmatur in Frontansicht;
- Fig. 3: die erfindungsgemässe Sanitärarmatur in einem Vertikalschnitt entlang der Linie A-A und in einem Horizontalschnitt entlang der Linie B-B der Figur 2, sowie eine elektronische Steuerung und eine von dieser angesteuerte Ventilbatterie;
- Fig. 4: den in den Figuren 1 und 2 gezeigten Teil der Sanitärarmatur in Draufsicht, wobei mit Doppelpfeilen die Bewegungsbereiche des Temperaturschiebers und des Durchflussschiebers angegeben sind;
- Fig. 5: gegenüber Fig. 3 vergrössert den dort mit V bezeichneten Ausschnitt mit einem Permanentmagneten im Durchflussschieber und diesem zugeordneten Hall-Sensoren;
- Fig. 6: in gleicher Darstellung wie Fig. 1 eine Ausführungsform, bei welcher der Temperaturschieber und der Durchflussschieber entlang geraden Bewegungsbahnen bewegbar sind;
- Fig. 7: in gleicher Darstellung wie Fig. 1 eine Bedienanordnung mit dem Temperaturschieber und dem Durchflussschieber;
- Fig. 8: einen Vertikalschnitt durch die Bedienanordnung;
- Fig. 9: einen Horizontalschnitt durch die Bedienanordnung und die elektronische Steuerung sowie die von dieser angesteuerte Ventilbatterie, wobei von dieser eine Mischwasserleitung zu einem in einem separaten Auslaufgehäuse angeordneten Wasserauslauf führt; und
- Fig. 10: einen Horizontalschnitt durch den Kopfteil und die Bedienanordnung entlang der Linie X-X der Fig. 3 mit einem Dichtelement.

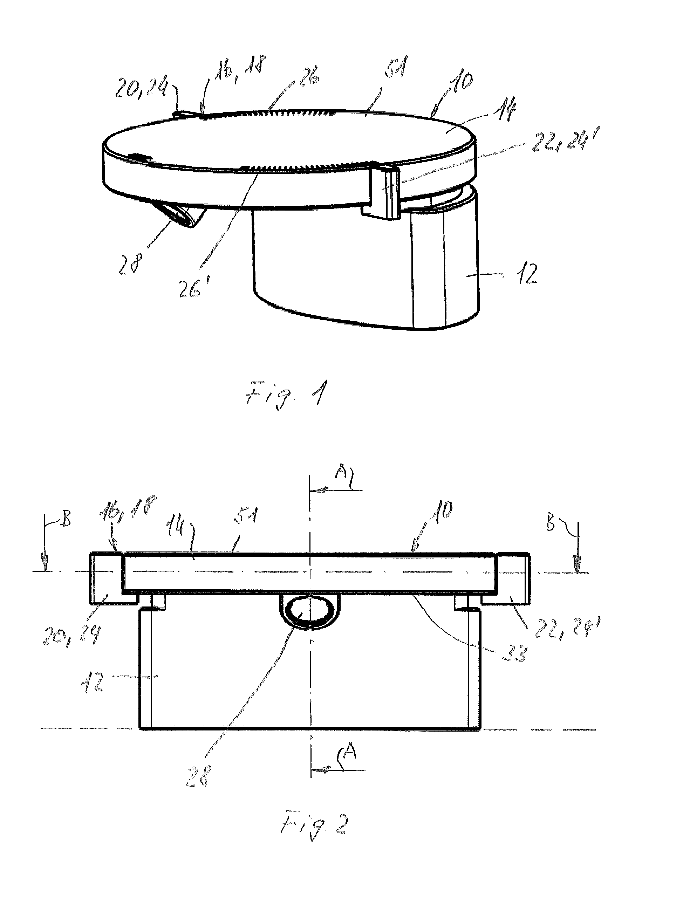

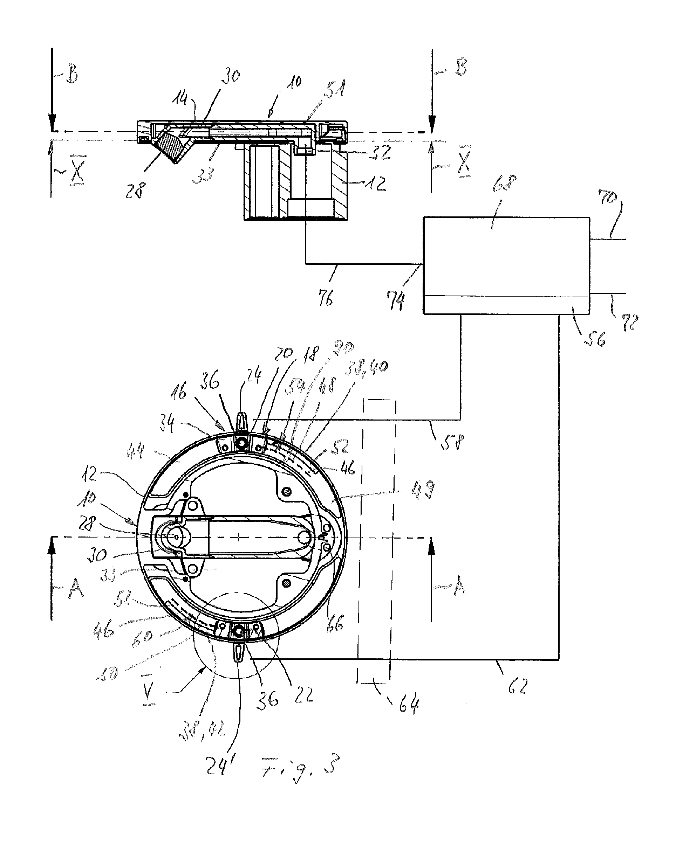

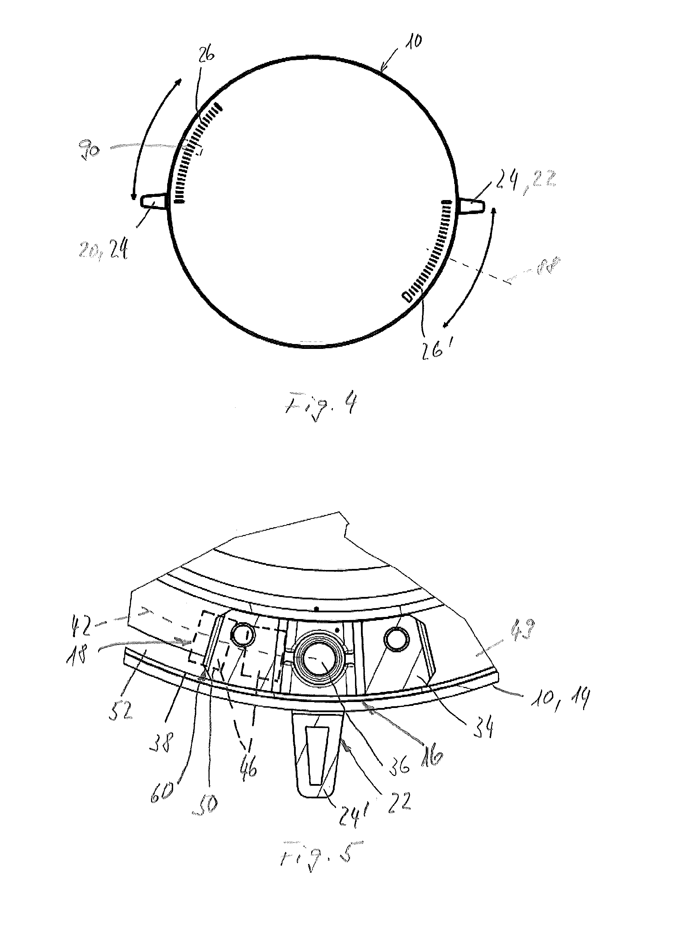

Wie den Fig. 1 und 2 zu entnehmen ist, weist die elektronisch gesteuerte Sanitärarmatur in der hier gezeigten Ausführungsform ein Armaturengehäuse 10 mit einem Sockelteil 12 und einem darauf angeordneten Kopfteil 14 auf. Der Sockelteil 12 ist dazu bestimmt, an einer Unterlage, beispielsweise an einem Waschtisch, befestigt zu werden. Der Kopfteil 14 hat die Form eines Kreiszylinders mit bezüglich des Durchmessers geringer Höhe. An beziehungsweise in ihm ist ein Bedienteil 16 mit einer Sensoranordnung 18 angeordnet, welche im Zusammenhang mit den Fig. 3 und 5 näher zu beschreiben ist.

Der Bedienteil 16 weist einen Temperaturschieber 20 und einen Durchflussschieber 22 auf. Von diesen Schiebern 20, 22 ist in den Fig. 1 und 2 der Betätigungshebel 24 beziehungsweise 24' sichtbar. Die Betätigungshebel 24, 24' sind entlang der Mantelfläche des Kopfteils 14 hin und her bewegbar.

Auf der Oberseite des Kopfteils 14 befindet sich sowohl für den Temperaturschieber 20 als auch für den Durchflussschieber 22 je eine Skalierung 26 beziehungsweise 26'. Diese zeigen auch die Bewegungsbereiche der Betätigungshebel 24, 24' auf, welche in der Fig. 4 mit Doppelpfeilen angedeutet sind. Die beiden Skalierungen 26, 26' sind bezüglich des Kopfteils 14 diametral gegenüberliegend angeordnet.

Der zylinderförmig ausgebildete Sockelteil 12 übernimmt auf der Rückseite die Form des Kopfteils 14, wogegen er auf der Vorderseite abgeflacht ist und etwa bis zur Mitte des Kopfteils 14 reicht. Der Kopfteil 14 ragt somit auf der Vorderseite über den Sockelteil 12 vor und weist auf seiner Unterseite im freiliegenden Endbereich einen Wasserauslauf 28 auf, in welchem bevorzugt ein Strahlregler (Perlator®) angeordnet ist.

Der Vollständigkeit halber sei erwähnt, dass der Sockelteil 12 auf der Rückseite in seinem oberen Endbereich im Querschnitt schulterartig verjüngt ausgebildet ist, um die Bewegung des Temperaturschiebers 20 nicht zu behindern.

Der guten Übersicht halber ist in der Fig. 3 oben das Armaturengehäuse 10 mit seinen Einbauten in einem Vertikalschnitt und unten der Kopfteil 14 in einem Horizontalschnitt dargestellt.

Im Innern des Kopfteils 14 befindet sich ein Strömungselement 30, welches einenends einen in Richtung gegen unten in den Sockelteil 12 hineinragenden Leitungsanschluss 32 und andernends einen schräg nach unten zeigenden Endbereich aufweist, mit welchem das Strömungselement 30 unter dem Kopfteil 14 beziehungsweise eine untere Abdeckplatte 33 des Kopfteils 14 vorsteht und welches den Wasserauslauf 28 bildet.

Dieses kann aus zwei dichtend zusammengefügten Teilen bestehen.

Wie dies insbesondere dem Horizontalschnitt entnehmbar ist, sind der Temperaturschieber 20 und der Durchflussschieber 22 gleich ausgebildet. Ihr Aufbau ist in Figur 5 vergrössert gezeigt. Die beiden Schieber 20, 22 weisen je einen Schlitten 34 auf, welcher mit dem betreffenden Betätigungshebel 24, 24' fest verbunden, bevorzugt mit diesem integral einstückig ausgebildet ist.

In jedem Schlitten 34 ist ein Permanentmagnet 36 angeordnet, dessen Magenfeld an der oben liegenden Stirnseite in vertikaler Richtung verläuft.

Jeder der beiden Schlitten 34 ist in einer eigenen Führung 38, beispielsweise in der Art eines Schwalbenschwanzes, gleitend geführt. Die Führungen 38 definieren eine erste Bewegungsbahn 40 für den Temperaturschieber 20 und eine zweite Bewegungsbahn 42 für den Durchflussschieber 22.

Im gezeigten Ausführungsbeispiel weisen die erste und zweite Bewegungsbahn 40, 42 die Form eines Kreisbogens auf und sie verlaufen koaxial zur Mantelfläche des Kopfteils 14.

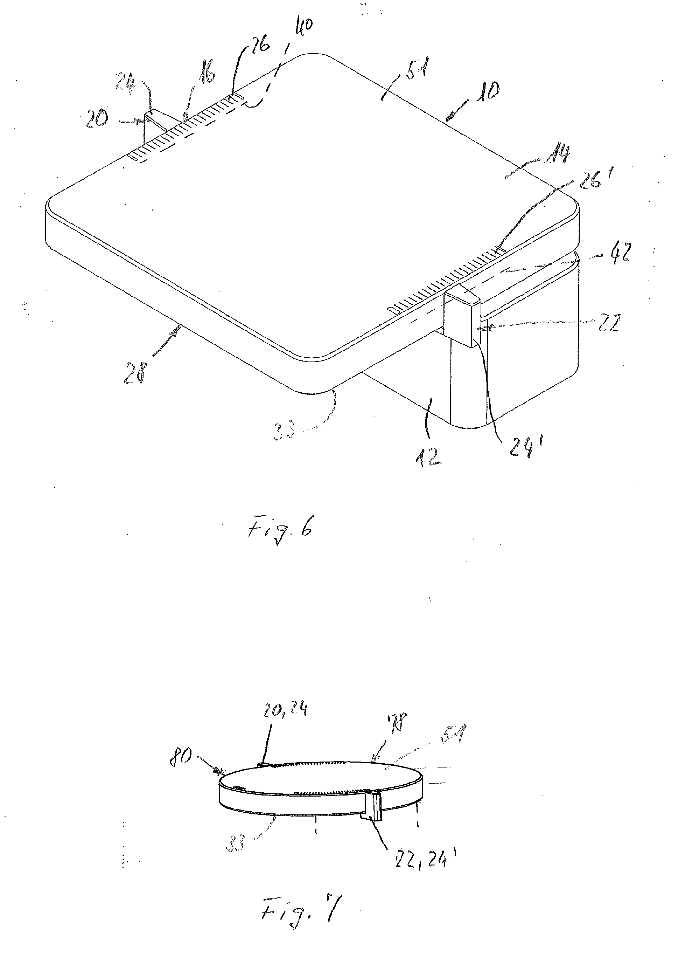

Die Bewegungsbahn 40, 42 kann auch geradlinig verlaufen; siehe Fig. 6.

Die Führungen 38 sind auf der Unterseite einer Wand 44 des Kopfteils 14 ausgebildet. Auf der Oberseite dieser Wand und somit im Innern des Kopfteils 14 sind Hall-Sensoren 46 stationär angeordnet. Eine erste Reihe 48 von Hall-Sensoren ist dem Temperaturschieber und eine zweite Reihe 50 von Hall-Sensoren 46 ist dem Durchflussschieber 22 zugeordnet.

Die Wand 44 ist hier an einem kreisringförmigen Führungselement 49 ausgebildet, welches umfangsseitig dichtend in eine obere Abdeckung 51 des Armaturengehäuses 10 eingesetzt ist. die obere Abdeckung weist einen die Oberseite bildenden, hier ebenen Abdeckplattenteil aus, von welchem umfangsseitig eine Mantelwand nach unten absteht. Mit dieser ist der Führungselement 49 dichtend verbunden, beispielsweise durch Kleben.

In der Fig. 3 ist der Temperaturschieber 20 in Kaltwasserstellung gezeigt. Ausgehend von dieser Stellung ist er im Uhrzeigersinn entlang der ersten Bewegungsbahn 40 verschiebbar, wobei sein Permanentmagnet 36 nacheinander mit den einzelnen Hall-Sensoren 46 der ersten Reihe 48 in Überlappung und somit in Zusammenwirkung gelangt. Der Bewegungsbereich des Temperaturschiebers 20 ist durch eine Nute 52 in der Wand 44 begrenzt, in welche Nute 52 ein Vorsprung des Temperaturschiebers 20 hineinragt. Befindet sich der Temperaturschieber 20 am von der Kaltwasserstellung entfernten Ende der ersten Bewegungsbahn 40, nimmt er die Warmwasserstellung ein. Zwischen diesen Endstellungen ist er von Hand hin und her verschiebbar und in Zwischenstellungen festsetzbar um eine Mischwassertemperatur anzuwählen.

Für den Durchflussschieber 22 trifft genau dasselbe zu. In der Fig. 3 ist der Durchflussschieber 20 in der Aus-Stellung gezeigt, das heisst es soll kein Wasser aus der Sanitärarmatur ausfliessen. Befindet sich der Durchflussschieber 22 (im Uhrzeigersinn) am andern Ende der zweiten Bewegungsbahn 42, befindet er sich in der Durchfluss-Maximumstellung. Zwischen diesen beiden Endstellungen ist der Durchflussschieber 22 hin und her bewegbar, um entsprechend der zweiten Reihe von Hall-Sensoren 46 den Wasserdurchfluss stufenartig einstellen zu können.

Die erste Reihe 48 von Hall-Sensoren 46 bildet einen ersten Sensor 54, welcher elektrische Temperatursignale in Abhängigkeit vom Ort beziehungsweise der Stellung des Temperaturschiebers 20 erzeugt und diese an eine elektronische Steuerung 56 über eine elektrische Leitung 58 abgibt.

Entsprechend bildet die zweite Reihe 50 von Hall-Sensoren 46 einen zweiten Sensor 60, welcher entsprechend dem Ort beziehungsweise der Stellung des Durchflussschiebers ein elektrisches Durchflusssignal erzeugt und dieses über die weitere elektrische Leitung 62 ebenfalls an die elektronische Steuerung 56 abgibt.

Den Strom für die Speisung der Hall-Sensoren 46 liefert hier die elektronische Steuerung 56. Die Regelung des Stromes für jeden der Hall-Sensoren 46 kann durch die elektronische Steuerung 56 und eine entsprechende Anzahl Speiseleitungen zu den Hall-Sensoren 46 erfolgen. Bevorzugt ist jedoch im Kopfteil 14 des Armaturengehäuses 10 eine schematisch angedeutete, elektronische Schaltung 64 vorhanden, welche von der Steuerung 56 gespiesen wird und welche jeden der Hall-Sensoren 46 mit dem bestimmten Strom speist.

Die Spannung der Hall-Sensoren 46, welche das Temperatursignal beziehungsweise das Durchflusssignal bestimmen, werden abgegriffen und vorzugsweise in der elektronischen Schaltung 64 verstärkt und dann über die Leitungen 58 beziehungsweise 62 der Steuerung 56 zugeführt.

In der Fig. 3 sind diese Leitungen und die elektronische Schaltung 64 nur schematisch angedeutet. Sie verlaufen von der elektronischen Steuerung 56 durch den Sockelteil 12 zum Kopfteil 14, welcher zu diesem Zweck Leitungsdurchlässe 66 aufweist.

Bevorzugt sind die Hall-Sensoren 46 und die entsprechenden elektrischen Leitungen sowie die elektronische Schaltung 46 auf einer Printplatte oder einem sogenannten Flexprint angeordnet, welcher in Kopfteil 14 eingelegt ist. Von diesen führt dann ein Kabel zur Steuerung 56.

Selbstverständlich ist die Wand 44 aus einem das Magnetfeld der Permanentmagnete 36 nicht beeinflussendem Material, vorzugsweise aus Kunststoff hergestellt.

Die elektronische Steuerung 56 steuert eine Ventilbatterie 68 an, welche allgemein bekannt ist. Sie weist einen Kaltwassereinlass 70, einen Warmwassereinlass 72 und einen Mischwasserauslass 74 auf. Letzterer ist über eine Mischwasserleitung 76, welche an den Leitungsanschluss 32 angeschlossen ist, mit dem Wasserauslauf 28 strömungsverbunden. Der Kaltwassereinlass 70 und der Warmwassereinlass 72 sind dazu bestimmt, mit einer Kaltwasserspeiseleitung beziehungsweise einer Warmwasserspeiseleitung verbunden zu sein.

Wie dies aus dem Dokument WO 2004/081300 A1 bekannt ist, weist die elektronische Steuerung 56 bevorzugt einen Prozessor auf, welcher mittels eines Computerprogramms die Ventilbatterie 68 derart steuert, dass die Temperatur und der Durchfluss des beim Wasserauslauf 28 die Sanitärarmatur verlassenden Wassers der Stellung des Temperaturschiebers 20 und des Durchflussschiebers 22 entspricht.

Während bei der in den Figuren 1 bis 5 gezeigten Ausführungsform der Temperaturschieber 20 und Durchflussschieber 22 entlang kreisbogenförmigen Bewegungsbahnen 40, 42 bewegt werden, ist in der Fig. 6 eine Ausführungsform der Sanitärarmatur gezeigt, bei welcher die erste Bewegungsbahn 40 und die zweite Bewegungsbahn 42 gradlinig verlaufen. Hier weist das Sockelteil 12 einen rechteckigen Querschnitt mit abgerundeten Ecken und der Kopfteil 14, in Draufsicht gesehen, eine quadratische Form mit abgerundeten Ecken auf. Auch hier ist der Wasserauslauf 28 auf der Unterseite des Kopfteils 14 vorgesehen. Der Aufbau und die Funktionsweise ist genau gleich wie weiter oben beschrieben, wobei die die erste Bewegungsbahn 40 und zweite Bewegungsbahn 42 definierenden Führungen 48 für die Temperaturschieber 20 und den Durchflussschieber 22 geradlinig ausgebildet sind und die erste Reihe 48 sowie zweite Reihe 50 der Hall-Sensoren 46 ebenfalls geradlinig verlaufen. Hier ist das Führungselement49 entsprechend quadratisch ausgebildet.

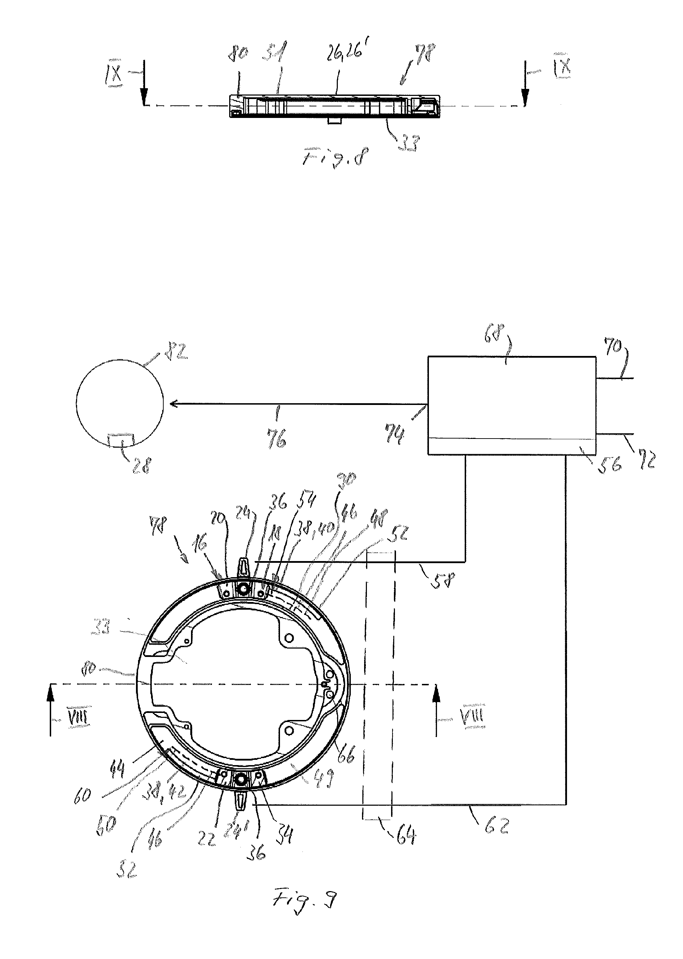

Eine weitere Ausführungsform der erfindungsgemässen Sanitärarmatur ist in den Figuren 7 bis 9 gezeigt. Die dem Kopfteil 14 entsprechende Bedieneinheit 78 weist ein separates Bediengehäuse 80 auf, welches analog dem Kopfteil 14, jedoch ohne Strömungselement 30 und Wasserauslauf 28 ausgebildet ist. Es weist die obere Abdeckung 51 mit der Mantelwand auf. Das Führungselement 49 ist umfangseitig, d.h. wie bei den andern Ausführungsformen mit der Mantelwand dichtend in die obere Abdeckung 51 eingesetzt. Die untere Abdeckplatte 33 schliesst das Bediengehäuse 80 dichtend unten ab.

Bei dieser Ausführungsform ist die Ventilbatterie 68 über die Mischwasserleitung 76 mit einem Wasserauslauf 28 verbunden, welcher in einem separaten, vom Bediengehäuse 18 getrennten Auslaufgehäuse 82 angeordnet ist. Im Bediengehäuse 80 befindet sich der Bedienteil 16 und die Sensoranordnung 18 in genau gleicher Art und Weise wie dies im Zusammenhang mit den Figuren 1 bis 5 beschrieben ist.

Der erste Sensor 54 und der zweite Sensor 60 sind ebenfalls über elektrische Leitungen 56, 62 mit der elektronischen Steuerung 56 verbunden, welche, wie weiter oben beschrieben, die Ventilbatterie 68 ansteuert.

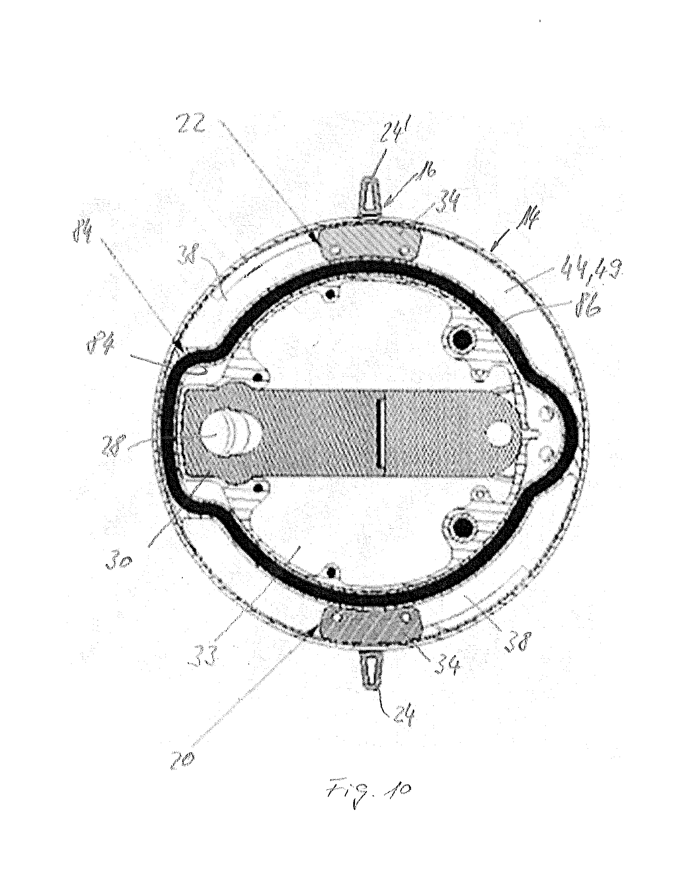

Wie dies Fig. 10 zeigt, weist das Führungselement 49 zwei, von der Wand 44 gegen unten abstehende und in einem gleichbleibenden Abstand zueinander verlaufende Wandelemente 84 auf, welche in sich geschlossen sind und einen Aufnahmekanal für ein in sich geschlossenes Dichtelement 86, welches bevorzugt als Flachdichtung ausgebildet ist, bildet.

Das Dichtelement 86 steht, im nicht zusammengepressten Zustand, über die Wandelemente 84 und somit den Aufnahmekanal vor. Beim Zusammenbau des Kopfteils 14 kommt das Dichtelement 86 an der unteren Abdeckplatte 33 zur Anlage und wird durch das zueinander Ziehen des Führungselements 49 und der unteren Abdeckplatte 33, beispielweise mittels Schrauben, zusammengepresst um Dichtwirkung zu entfalten.

Das Dichtelement 86 verhindert das Eindringen von Flüssigkeit und Schmutz in das Innere des Armaturengehäuses 10, insbesondere der Kopfteils 14, wo die Sensoranordnung 18 und gegebenenfalls die elektronische Schalung 64 angeordnet sind.

Das Dichtelement 86 verläuft bezüglich des Temperaturschiebers 20 und des Durchflussschiebers 22 sowie den zugeordneten Führungen 38 radial innen. Der Temperaturschieber 20 und Durchflussschieber 22 sind somit auf der der Umgebung zugewandten Aussenseite des Kopfteils 14 und somit des Armaturengehäuses 10 angeordnet.

Wie dies in Fig. 4 mit einer gestrichelten Linie angedeutet ist, ist es auch möglich, die Aus-Stellung 88 für den Durchflussschieber 22 wenigstens annähernd in der Längsmitte des Bewegungsbereichs des Durchflussschiebers 22 vorzusehen. Dies insbesondere bei einer Sanitärarmatur für Badewanne und Kopf- / Handbrause. Ausgehend von der Aus-Stellung 88 kann beispielsweise durch Bewegen des Durchflussschiebers 22 im Gegenuhrzeigersinn der Wasserdurchfluss für die Kopf- / Handbrause vergrössert werden, wobei der maximale Durchfluss erreicht ist, wenn sich der Durchflussschieber am betreffenden Ende des Bewegungsbereichs befindet. Entsprechend kann ausgehend von der Aus-Stellung 88 durch Bewegen des Durchflussschiebers 22 im Uhrzeigersinn der Wasserdurchfluss für die Badewanne vergrössert werden, wobei der maximale Durchfluss erreicht ist, wenn sich der Durchflussschieber am betreffenden Ende des Bewegungsbereichs befindet.

Bei dieser Ausführungsform ist es vorteilhaft, entsprechend der Aus-Stellung 88 ein Rastelement vorzusehen, dessen Kraft überwunden werden muss, um den Durchflussschieber 22 aus der Aus-Stellung 88 in die eine oder andere Richtung zu verschieben. Der Benutzer fühlt bei dieser Ausführungsform auch das Erreichen der Aus-Stellung 88.

Bei dieser Ausführungsform befindet sich bevorzugt bei der Aus-Stellung 88 kein Hall-Sensor 36 und sind dem Bewegungsbereich für die Kopf- / Handbrause sowie dem Bewegungsbereich für die Badewanne je einen Reihe von Hall-Sensoren 36 zugeordnet, wie dies weiter oben beschrieben ist.

Der Ventilbatterie 68 ist bei dieser Ausführungsform ein Umschaltventil zugeordnet, welches eingangsseitig an den Mischwasserauslass 74 angeschlossen ist und ausgangsseitig einerseits über eine Mischwasserleitung 76 mit dem an der Kopf- / Handbrause ausgebildeten Wasserauslauf 28 und andererseits über eine weitere Mischwasserleitung 76 mit dem an dem Badewannenauslauf ausgebildeten Wasserauslauf 28 verbunden ist.

Die elektronische Steuerung 56 steuert zusätzlich das Umschaltventil entsprechend der Position des Durchflussschiebers 22. Im Übrigen entsprechen der Aufbau und die Funktionsweise dieser Ausführungsform jenem beziehungsweise jener der weiter oben beschriebenen Ausführungsformen.

Auch hier ist es möglich, lineare Bewegungsbahnen 40, 42 für den Durchflussschieber 22 und den Temperaturschieber 20 vorzusehen.

Weiter ist es möglich, bei allen Ausführungsformen, bevorzugt bei der soeben Beschriebenen, eine Temperaturbegrenzung 90 vorzusehen. Dieser Temperaturbegrenzung 90 kann beispielsweise durch ein mechanisches Begrenzungselement gebildet sein, welches beispielsweise am Armaturengehäuse 10 oder an der Führung 38 des Temperaturschiebers 20 anbringbar ist, beispielsweise durch einrasten. Es begrenzt die Bewegung des Temperaturschiebers 20 über die gewünschte zulässige Temperatur hinaus.

Es ist auch möglich, den Temperaturbegrenzung 90 durch ein am Temperaturschieber 20 federnd angeordnetes Rastelement auszubilden, welches mit einer der gewünschten zulässigen Temperatur zugeordneten Vertiefung (oder Erhebung), beispielsweise in der Wand 44 zusammenwirkt. Dabei ist es denkbar, dass der Temperaturschieber 20 gewollt durch einen grösseren Kraftaufwand über die der gewünschten zulässigen Temperatur zugeordneten Stellung hinaus bewegbar ist.

Schlussendlich sei erwähnt, dass es auch möglich ist, die elektronische Steuerung 56 derart zu programmieren, dass Mischwasser mit maximal der gewünschten zulässigen Temperatur durch den Mischwasserauslass 74 ausfliessen kann. In diesem Fall ist der Temperaturbegrenzung 90 in die elektronische Steuerung 56 integriert.

Es ist auch möglich, eine Durchflussbegrenzung vorzusehen. Diese kann entsprechend der Temperaturbegrenzung 90 ausgebildet sein. Bei Integration des Durchflussbegrenzung in die elektronische Steuerung 56, steuert diese die Ventilbatterie 68 derart an, dass der Wasserdurchfluss auf den bestimmten maximalen Wert begrenzt ist.

Der Vollständigkeit halber sei erwähnt, dass selbstverständlich eine elektrische Energieversorgung vorhanden ist, um alle elektrischen und elektronischen Komponenten zu speisen. Diese kann beispielsweise über ein Netzgerät erfolgen, welches an die elektrische Gebäudeinstallation angeschlossen ist.

Selbstverständlich ist es auch denkbar, anstelle von Hall-Sensoren 46 andere allgemein bekannte Sensoren einzusetzen, um den Ort beziehungsweise die Stellung des Temperaturschiebers 20 und des Durchflussschiebers 22 zu erfassen und entsprechende elektrische Temperatursignale beziehungsweise Durchflusssignale zu erzeugen, welche der elektronischen Steuerung 56 zugeführt werden.

Die vorliegende Erfindung betrifft auch eine Bedieneinheit 78 und eine Sanitärarmatur mit einer Bedieneinheit 76 mit einem eine Sensorordnung 18 aufweisenden Bedienteil 16, wobei der Bedienteil 16 einen entlang einer ersten Bewegungsbahn 40 von Hand hin und her bewegbaren Temperaturschieber 20 sowie einen entlang einer zweiten Bewegungsbahn 42 von Hand hin und her bewegbarer Durchflussschieber 22 und Sensoranordnung 18 mit einem ersten Sensor 54, welcher in Abhängigkeit vom Ort beziehungsweise der Stellung des Temparaturschiebers 20 ein entsprechendes elektrisches Temperatursignal erzeugt, sowie einen zweiten Sensor 60, welcher in Abhängigkeit vom Ort beziehungsweise der Stellung des Durchflussschiebers 22 ein entsprechendes elektrisches Durchflusssignal erzeugt, aufweist.

Das Temperatursignal und das Durchflusssignal werden an eine elektronische Steuerung 56 abgegeben. Diese steuert eine Ventilbatterie 68.

Bevorzugt ist die Bedieneinheit nach einem der Ansprüche 2 bis 6 ausgebildet.

Bevorzugt weist die Bedieneinheit 78 ein Bediengehäuse 80 auf, in beziehungsweise an welchem der Bedienteil 16 angeordnet ist.

Wie in Fig. 7 mit gestrichelten Linien angedeutet, kann die Bedieneinheit 78 an einer Wand oder einer Unterlage, wie einem Tisch, befestigt werden.

## Patentansprüche

1. Sanitärarmatur mit einem Wasserauslauf (28), einer elektrisch gesteuerten Ventilbatterie (68) mit einem Kaltwassereinlass (70), einem Warmwassereinlass (72) und einem mit dem Wasserauslauf (28) strömungsverbundenen Mischwasserauslass (74), einem eine Sensoranordnung (18) aufweisenden Bedienteil (16) und einer elektronischen Steuerung (56), welche aufgrund von elektrischen Signalen der Sensoranordnung (18) die Ventilbatterie (68) ansteuert, wodurch Kaltwasser, Warmwasser oder Mischwasser mit einem gewünschten Durchflusswert und/oder mit einer gewünschten Temperatur dem Wasserauslauf (28) zugeführt wird, **dadurch gekennzeichnet, dass** der Bedienteil (16) einen entlang einer ersten Bewegungsbahn (40) hin und her bewegbaren Temperaturschieber (20) sowie einen entlang einer zweiten Bewegungsbahn (42) hin und her bewegbaren Durchflussschieber (22) und die Sensoranordnung (18) einen ersten Sensor (54), welcher in Abhängigkeit vom Ort des Temperaturschiebers (20) ein entsprechendes elektrisches Temperatursignal erzeugt, sowie einen zweiten Sensor (60), welcher in Abhängigkeit vom Ort des Durchflussschiebers (22) ein entsprechendes elektrisches Durchflusssignal erzeugt, aufweist und die Steuerung (56) aufgrund des Temperatursignals und des Durchflusssignals die Ventilbatterie (68) ansteuert.

2. Sanitärarmatur nach Anspruch 1, **dadurch gekennzeichnet, dass** der erste Sensor (54) sowie der zweite Sensor (60) je mindestens einen Hall-Sensor (46) und der Temperaturschieber (20) sowie der Durchflussschieber (22) je einen mit dem zugeordneten Hall-Sensor (46) zusammenwirkenden Permanentmagneten aufweisen.

3. Sanitärarmatur nach Anspruch 2, **dadurch gekennzeichnet, dass** der erste Sensor (54) sowie der zweite Sensor (60) mehrere Hall-Sensoren (46) aufweisen, welche jeweils in einer Reihe (48, 50) in Richtung der ersten beziehungsweise zweiten Bewegungsbahn (40, 42) hintereinander angeordnet sind und mit welchen der entsprechende Permanentmagnet (36) zusammenwirkt.

4. Sanitärarmatur nach Anspruch 2 oder 3, **gekennzeichnet durch** eine elektronische Schaltung (64), welche die Hall-Sensoren (46) mit einem definierten Strom speist und die Ausgangsspannung der Hall-Sensoren (46) verstärkt und als Temperatursignal beziehungsweise Durchflusssignal an die Steuerung (56) weiterleitet.

5. Sanitärarmatur nach einem der Ansprüche 1 bis 4, **dadurch gekennzeichnet, dass** der Bedienteil (16) eine Wand (44) aufweist, welche auf einer Seite die erste und die zweite Bewegungsbahn (40, 42) definierende Führungen (38) für den Temperaturschieber (20) und den Durchflussschieber (22) bildet, wobei der erste sowie der zweite Sensor (54, 60) auf der andern Seite der Wand (44) angeordnet sind.

6. Sanitärarmatur nach Anspruch 5, **dadurch gekennzeichnet, dass** die Wand (44) in einer wenigstens annähernd horizontalen Ebene liegt und die Führungen (38) auf der Unterseite ausgebildet sind.

7. Sanitärarmatur nach einem der Ansprüche 1 bis 6, **gekennzeichnet durch** ein dem Wasserauslauf (28) und dem Bedienteil (16) gemeinsam zugeordnetes Armaturengehäuse (10).

8. Sanitärarmatur nach Anspruch 7, **dadurch gekennzeichnet, dass** das Armaturengehäuse (10) einen Sockelteil (12) sowie einen separaten, an diesem befestigten Kopfteil (16) aufweist, und dem Kopfteil (16) ein mit einer unteren Abdeckplatte (33) zusammenwirkendes, in sich geschlossenes Dichtelement (84) zugeordnet ist, welches das Eindringen von Flüssigkeit in das Innere des Kopfteils (16) verhindert, wobei die Sensoranordnung (18) auf der Innenseite des Kopfteils (16) und der Temperaturschieber (20) sowie der Durchflussschieber (22) auf der der Umgebung zugewandten Aussenseite des Kopfteils (16) angeordnet sind.

9. Sanitärarmatur nach einem der Ansprüche 1 bis 6, **dadurch gekennzeichnet, dass** das Armaturengehäuse (10) ein dem Wasserauslauf (28) zugeordnetes Auslaufgehäuse (82) und ein separates, dem Bedienteil (16) zugeordnetes Bediengehäuse (80) aufweist.

10. Sanitärarmatur nach Anspruch 9, **dadurch gekennzeichnet, dass** dem Bediengehäuse (80) ein mit einer unteren Abdeckplatte (33) zusammenwirkendes, in sich geschlossenes Dichtelement (84) zugeordnet ist, welches das Eindringen von Flüssigkeit in das Innere des Bediengehäuses (80) verhindert, wobei die Sensoranordnung (18) auf der Innenseite des Bediengehäuses (80) und der Temperaturschieber (20) sowie der Durchflussschieber (22) auf der der Umgebung zugewandten Aussenseite des Bediengehäuses (80) angeordnet sind.

11. Sanitärarmatur nach Anspruch 5 und einem der Ansprüche 6 bis 10, **dadurch gekennzeichnet, dass** die Wand (44) durch ein in eine obere Abdeckung (51) des Kopfteils (16) beziehungsweise Bediengehäuses (80), vorzugsweise umfangsseitig dichtend eingesetztes Führungselement (49) für den Temperaturschieber (20) und den Durchflussschieber (22) gebildet ist.

12. Sanitärarmatur nach Anspruch 5 und einem der Ansprüche 8 oder 10, **dadurch gekennzeichnet, dass** die Wand (44) durch ein in eine obere Abdeckung (51) des Kopfteils (16) beziehungsweise Bediengehäuses (80), vorzugsweise umfangsseitig dichtend eingesetztes Führungselement (49) für den Temperaturschieber (20) und den Durchflussschieber (22) gebildet ist und das Dichtelement (84) einerseits mit der unteren Abdeckplatte (33) und andererseits mit dem Führungselement (49) dichtend zusammenwirkt.

13. Sanitärarmatur nach einem der Ansprüche 1 bis 12, **gekennzeichnet durch** eine Temperaturbegrenzung (90) zum Verhindern des Ausfliessens von Mischwasser über einer vorbestimmten Temperatur und / oder eine Durchflussbegrenzung zum Begrenzen des Wasserdurchflusses auf einen vorbestimmten Wert.

14. Sanitärarmatur nach einem der Ansprüche 1 bis 13, **dadurch gekennzeichnet, dass** eine Aus-Stellung (88) des Durchflussschiebers (22) wenigstens annähernd in der Längsmitte der zweiten Bewegungsbahn (42) vorgesehen ist, der Durchflussschieber (22), ausgehend von der Aus-Stellung (88), in entgegengesetzte Richtungen bewegbar ist und die elektronische Steuerung (56), aufgrund des vom zweiten Sensor (60) erhaltenen Durchflusssignals, die Ventilbatterie (68) derart ansteuert, dass das Mischwasser dem einen oder andern von zwei Wasserausläufen (28) zugeführt wird.
